# EUROPÄISCHE PATENTANMELDUNG

(11) **EP 0 639 424 A1**
(43) Veröffentlichungstag der Anmeldung: **22.02.1995**
(21) Anmeldenummer: 94112291.3
(22) Anmeldetag: 05.08.1994
(51) Int. Cl.: B23K 9/20, B23K 35/02

(54) **Aus Blech geformter Schweissbolzen**

(30) Priorität: 17.08.1993 DE 4327647
(71) Anmelder: HBS BOLZENSCHWEISSSYSTEME GmbH & Co. KG, D-85221 Dachau (DE)
(72) Erfinder: Susgin, Detlef, D-82024 Taufkirchen (DE)
(74) Vertreter: Strehl Schübel-Hopf Groening & Partner

(57) **Zusammenfassung**

Schweißbolzen werden aus einem Blechband ausgestanzt, wobei der Bolzenschaft 11 aus einem am Kopf 10 angeformten und gegenüber diesem teilweise freigeschnittenen (12) und aus der Ebene des Kopfes 10 herausgebogenen Materialstreifen gebildet wird. Zur Erzielung ausreichender Knicksteifigkeit wird der den Schaft 11 bildende Materialstreifen um die Bolzenachse verformt, vorzugsweise so weit, daß die beiden Seitenkanten 15, 16 dieses Materialstreifens einander berühren.

## Beschreibung

Ein Schweißbolzen mit einem Blechkopf und einem daran angeformten, aus der Fläche des Kopfes angewinkelten Schaft ist aus US-A-3 835 285 bekannt. Derartige, mit einem verhältnismäßig großen Köpfen versehene Schweißbolzen dienen insbesondere zur Befestigung von Isolier- oder Dämmatten oder sonstige Materiallagen an metallischen Trägern. Dabei wird der Bolzen mit seinem zugespitzten Schaft durch die Materiallage gedrückt, bis die Spitze den Metallträger erreicht, woraufhin mittels einer auf die Oberfläche des Kopfes aufgesetzten Elektrode der Schweißvorgang durchgeführt wird.

Der bekannte Schweißbolzen ist aus einem quadratischen Blechzuschnitt gefertigt, aus dem zur Bildung des Bolzenschafts ein verhältnismäßig breiter Streifen von einer Ecke des Quadrats bis über die Mitte hinaus freigestanzt und rechtwinklig abgebogen ist. Daraus, daß die Schnitte zur Bildung des Bolzenschafts diagonal zu dem quadratischen Kopf verlaufen, ergibt sich ein verhältnismäßig langer Schaft. Je nach Dicke der zu befestigenden Materiallage kann es aber sein, daß der Schaft zu kurz ist oder bei größerer Dimensionierung des Blechzuschnitts der Bolzenkopf unnötig groß wird.

Bei einem längeren Bolzenschaft besteht die Schwierigkeit, daß der aus dem Blechzuschnitt ausgestanzte Materialstreifen nur verhältnismäßig geringe Steifigkeit aufweist. Diese Schwierigkeit ist dann besonders groß, wenn von einem Blechzuschnitt ausgegangen wird, bei dem zur Erzeugung eines Schweißbolzens mit relativ kleinerem Kopf und längerem Schaft der diesen bildende Materialstreifen über die Umrißform des Kopfes hinausragt und, um die Festigkeit des Kopfes nicht übermäßig zu beeinträchtigen, schmal ausgeführt wird.

Der Erfindung liegt die Aufgabe zugrunde, einen Schweißbolzen anzugeben, der bei kostengünstiger Fertigung aus Blechmaterial ausreichende Festigkeit aufweist.

Die erfindungsgemäße Lösung dieser Aufgabe ist im Anspruch 1 gekennzeichnet. Durch die Verformung des den Schaft bildenden Blechstreifens quer zur Schaftachse erhält der Schaft hohe Biege- und Knicksteifigkeit auch dann, wenn aus Kosten- und Gewichtsgründen von verhältnismäßig dünnen Blech ausgegangen wird.

Die in Anspruch 2 angegebene V- oder U-Form des Querschnitts läßt sich durch einen einfachen Biegevorgang herstellen und ergibt hohe Steifigkeit.

Die Weiterbildung der Erfindung nach Anspruch 3 und 4 vermeidet scharfe Schnittkanten längs des Bolzenschafts bei gleichzeitig weiterer Erhöhung der Steifigkeit.

Die Ausgestaltung nach Anspruch 5 führt zu einer Versteifung des Kopfes, die insbesondere bei großen Kopfabmessungen sinnvoll ist. Dabei können ein oder mehrere Sicken vorgesehen sein, die bei rechteckigen Kopf geradlinig und parallel zu den Kanten verlaufen können. Eine die Kopfmitte mehr oder weniger vollständig umgebende kreisringförmige oder viereckig-ringförmige Sicke ergibt eine besonders gleichmäßige, hohe Versteifung.

Die Weiterbildung der Erfindung nach Anspruch 6 ist dann besonders günstig, wenn der Schweißbolzen zum Fixieren einer an ihrer Oberfläche mit einer Metallschicht versehenen Materiallage eingesetzt werden soll. Die an der Unterseite des Kopfes und an der Außenfläche des Schafts gebildete Isolierung vermeidet in diesen Fall einen unerwünschten Stromübergang zwischen den Bolzen und der Metallschicht. Bei dem Isolierüberzug kann es sich um eine Kunststoffschicht oder eine Lackierung aus einer elektrisch isolierenden Farbe handeln.

Ein zweckmäßiges Verfahren zur Herstellung des erfindungsgemäßen Schweißbolzens ist in Anspruch 7 angegeben. Dabei lassen sich die zur Bildung der einzelnen Schweißbolzen dienenden Zuschnitte mit einem Minimum an Verschnitt bei hoher Fertigungsgeschwindigkeit ausstanzen.

Die Maßnahme des Anspruchs 8 ist im Hinblick auf Einfachheit der Fertigung und Verschnittfreiheit von Vorteil; die in Anspruch 9 angegebene zusätzliche Maßnahme führt zu einer weiteren Vereinfachung des Herstellverfahrens.

Der Verfahrensschritt nach Anspruch 10 ergibt ohne zusätzlichen Fertigungsaufwand einen Schweißbolzen, der dort elektrisch isoliert ist, wo es bei der Befestigung der erwähnten, an der Oberfläche leitenden Materiallagen erforderlich ist. Dabei ist die Maßnahme des Anspruchs 11 insofern von Bedeutung, als ein elektrischer Stromübergang auch an etwaigen Stanzgraten der Kopfkanten vermieden wird.

Ein bevorzugtes Ausführungsbeispiel der Erfindung wird nachstehend anhand der Zeichnungen näher erläutert. Darin zeigt
- Figur 1: eine perspektivische Darstellung eines aus einem Blechzuschnitt hergestellten Schweißbolzens,
- Figur 2: eine Seitenansicht des Schweißbolzens mit im Querschnitt gezeigten Kopf,
- Figur 3: einen Querschnitt durch den Bolzenschaft längs der Linie III-III der Figur 2,
- Figur 4: eine perspektivische Darstellung von gestapelten Schweißbolzen, und
- Figur 5: ein Anordnungsmuster zum Ausstanzen von Blechzuschnitten für die Herstellung von Schweißbolzen.

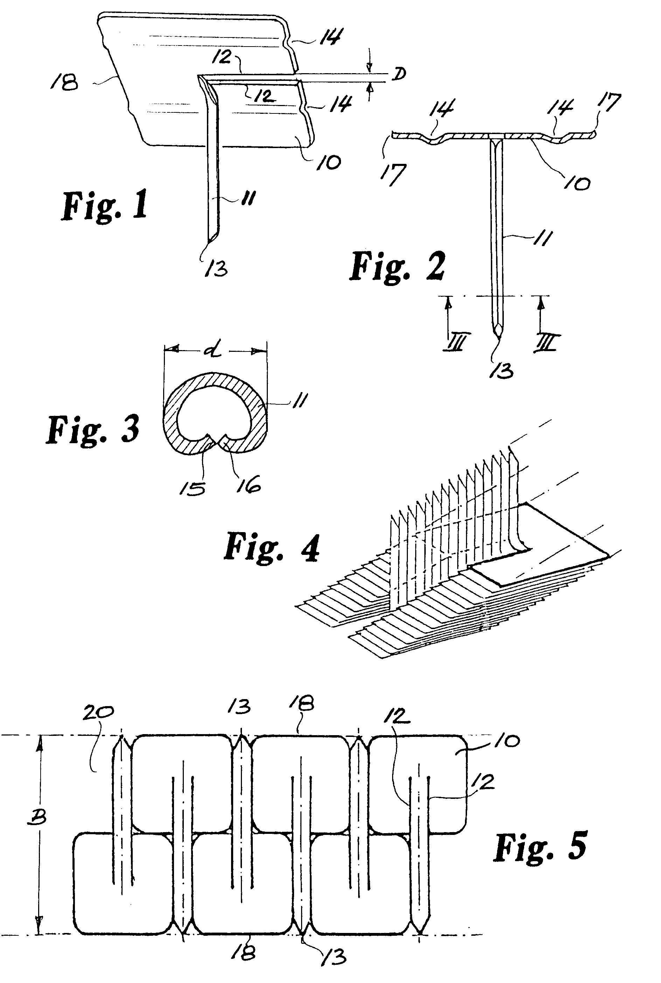

Gemäß der vereinfachten Darstellung der Figur 1 besteht der Schweißbolzen aus einem Kopf **10** in Form einer rechteckigen, insbesondere quadratischen, Blechplatte mit gerundeten Ecken, aus der ein den Bolzenschaft **11** bildender Blechstreifen rechtwinklig herausgebogen ist. Der Blechstreifen wird dabei teilweise von Einschnitten **12** gebildet, die von der Mitte einer Seitenkante des Kopfes **10** bis etwas über die Mitte verlaufen. Der den Schaft **11** bildende Blechstreifen ist an seinem Ende zur Ausbildung einer scharfen Spitze **13** dreieckig geschnitten. In den von den Einschnitten **12** gebildeten Hälften des Kopfes **10** ist jeweils eine quer über den Kopf **10** verlaufende Versteifungssicke **14** eingeformt.

Wie aus Figur 2 und 3 hervorgeht, ist der den Schaft **11** bildende Materialstreifen zur Erzielung ausreichender Biegeund Knicksteifigkeit des Schaftes um die Schaftachse verformt. In einfachsten Fall wird durch diese Verformung ein etwa U- oder V-förmiger Schaftquerschnitt erzeugt.

In den in Figur 3 angenommenen Beispiel ist die Verformung so weit ausgeführt, daß die beiden Längskanten **15**, **16** des den Schaft **11** bildenden Materialstreifens einander berühren, so daß sich ein im wesentlichen geschlossenes Profil ergibt. Das so erzeugte Rohr weist selbst dann, wenn aus Gründen der Kosten- und Gewichtsersparnis von dünnem Blech ausgegangen wird, ausgezeichnete Steifigkeit auf und eignet sich zur Befestigung auch von verhältnismäßig dichten und schweren Materiallagen.

Die in Figur 3 gezeigte Querschnittform ist auch deshalb von Vorteil, weil die an den Längskanten **15**, **16** des Zuschnitts gebildeten, gelegentlich scharfen Stanzgraten nach innen weisen, so daß die Gefahr von Verletzungen an diesen Kanten vermieden wird.

Das Blech, aus dem der Schweißbolzen ausgeschnitten ist, weist auf seiner einen Oberfläche einen Überzug aus elektrisch isolierendem Material auf (der in der Zeichnung nicht näher dargestellt ist). Bei dem Überzug kann es sich um eine Kunststoff-Beschichtung oder eine Lackierung handeln. Bei der Herstellung werden die Verformungsschritte so durchgeführt, daß diese Isolierung auf der unteren Fläche des Kopfes **10** und der Außenfläche des Schaftes **11** zu liegen kommt.

Die in Figur 3 gezeigte Querschnittsform mit nach innen gezogenen und aufeinander zu gebogenen Längskanten **15**, **16** des den Schaft **11** bildenden Blechstreifens ist bei einen auf diese Weise elektrisch isolierten Schweißbolzen besonders vorteilhaft, weil dann auch die Gefahr eines elektrischen Kontaktes zwischen einer elektrisch leitenden Schicht auf der Materiallage und metallischen Oberflächenbereichen des Schweißbolzens vermieden wird.

Aus den gleichen Grund ist auch, wie aus Figur 2 hervorgeht, die Stanzung so durchgeführt, daß etwaige Stanzgrate **17** an Umfang des Kopfes **10** nach oben ragen; dadurch wird auch an diesen Stellen Kontakt zu einer auf der Materiallage vorhandenen elektrisch leitenden Schicht vermieden.

Figur 4 ist eine schematische Darstellung einer Anzahl von übereinander gestapelter Schweißbolzen gemäß Figur 1 bis 3. Aus der Verformung des Bolzenschafts **11** um seine Achse ergibt sich, daß der Abstand **D** (Figur 1) zwischen den Einschnitten **12** im Kopf **10** etwas größer ist als der Durchmesser **d** (Figur 3) des verformten Schaftes **11**. Daher lassen sich die Schweißbolzen in der in Figur 4 angedeuteten Weise ineinander schachteln, was nicht nur im Hinblick auf Verpackung, Transport und Lagerung von Vorteil ist, sondern auch die aufeinanderfolgende automatische Zuführung einzelner Schweißbolzen zur Schweißstelle, etwa mit Hilfe eines entsprechend konzipierten, an der Schweißvorrichtung angebrachten Magazins, erleichtert.

Gemäß Figur 5 werden die Zuschnitte für die Schweißbolzen aus Blech-Bandmaterial **20** ausgestanzt, dessen Breite **B** so bemessen ist, daß sie gerade der Abmessung von der Schaftspitze **13** bis zu der ihr gegenüberliegenden Kante **18** des Kopfes **10** entspricht. Die Schnitte in dem Band **20** werden dabei so gelegt, daß benachbarte Bolzenzuschnitte um jeweils 180° gedreht sind. Der den Bolzenschaft **11** bildende Blechstreifen liegt daher vor dem Ausstanzen jeweils zwischen den Köpfen **10** benachbarter Zuschnitte.

Beim Ausstanzen aus dem Materialband **20** werden nicht nur die einzelnen Zuschnitte voneinander getrennt sondern gleichzeitig die in den Kopf **10** führenden Einschnitte **12** für den Schaft **11**, die Rundungen an den vier Ecken des Kopfes **10** sowie die Abschrägungen an der Schaftspitze **13** erzeugt.

In unmittelbarem Anschluß an den Stanzschritt läßt sich mit einer geeigneten Stanz-Biegemaschine der den Schaft **11** bildende Materialstreifen jedes Zuschnitts um seine Längsachse verformen und gleichzeitig der Kopf **10** gegenüber der Wurzel dieses Materialstreifens rechtwinklig abbiegen.

Ist das Blechband **20** einseitig mit einem elektrisch isolierenden Überzug versehen, so wird die Stanzung von der beschichteten Seite aus durchgeführt, so daß etwaige Stanzgrate von der beschichteten Seite weg weisen. Nimmt man an, daß die beschichtete Seite in Figur **5** dem Betrachter zugewandt ist, so erfolgt die Stanzung vom Betrachter weg. In gleicher Weise wird auch der Biegevorgang zur Verformung der Bolzenschäfte gemäß Figur **5** vom Betrachter weg durchgeführt.

## Patentansprüche

1. Schweißbolzen mit einem Blechkopf und einem daran angeformten, aus der Fläche des Kopfes (10) abgewinkelten Schaft (11), dadurch gekennzeichnet, daß der den Schaft (11) bildende Blechstreifen quer zur Schaftachse verformt ist.

2. Schweißbolzen nach Anspruch 1, wobei der Bolzenschaft (11) in Querschnitt im wesentlichen V- oder U-förmig ist.

3. Schweißbolzen nach Anspruch 1 oder 2, wobei die Längskanten (15, 16) des den Schaft (11) bildenden Blechstreifens zu einen in wesentlichen geschlossenen Profil aufeinander zu gebogen sind.

4. Schweißbolzen nach Anspruch 3, wobei die die Seitenkanten (15, 16) bildenden Randflächen des Blechstreifens den Innern des Schaftprofils zugewandt sind.

5. Schweißbolzen nach einen der Ansprüche 1 bis 4, wobei der Kopf (10) eine Versteifungssicke (14) aufweist.

6. Schweißbolzen nach einem der Ansprüche 1 bis 5, wobei das Blech, aus den er hergestellt ist, an derjenigen Fläche einen elektrisch isolierenden Überzug aufweist, die in verformten Zustand die Unterseite des Kopfes (10) und die Außenseite des Schaftes (11) bildet.

7. Verfahren zum Herstellen von Schweißbolzen nach einen der Ansprüche 1 bis 6, dadurch gekennzeichnet, daß aus Bandmaterial (20) Bolzen-Zuschnitte ausgestanzt werden, die einen rechteckigen Kopf (10) und einen an einer Seite des Rechtecks im wesentlichen mittig ansetzenden streifenförmigen Fortsatz zur Bildung des Bolzenschafts (11) aufweisen, und daß benachbarte Zuschnitte in dem Bandmaterial (20) um jeweils 180° gegeneinander gedreht derart verschachtelt sind, daß der Kopf (10) jedes Zuschnitts zwischen den streifenförmigen Schaftansätzen der benachbarten Zuschnitte liegt.

8. Verfahren nach Anspruch 7, wobei die Breite (**B**) des Bandmaterials (20) mit der Länge des Bolzenzuschnitts von der Spitze (13) des streifenförmigen Ansatzes bis zur abgewandten Kante (18) des rechteckigen Kopfes (10) übereinstimmt.

9. Verfahren nach Anspruch 7 oder 8, wobei die Bolzenzuschnitte im gleichen Arbeitsgang aus dem Materialband (20) ausgestanzt, an der Verbindungsstelle zwischen Schaft (11) und Kopf (10) abgewinkelt und der den Schaft (11) bildende streifenförmige Ansatz um seine Achse verformt wird.

10. Verfahren nach Anspruch 9, wobei von einen Bandmaterial (20) ausgegangen wird, dessen eine Fläche mit einem Isolierüberzug versehen ist, und daß die Verformung so durchgeführt wird, daß der Isolierüberzug an der beim fertigen Schweißbolzen dem Schaft (11) zugewandten unteren Fläche des Kopfes (10) sowie an der Außenfläche des verformten Schaftes vorhanden ist.

11. Verfahren nach Anspruch 10, wobei von der beschichteten Seite des Bandmaterials (20) aus gestanzt wird.
